# EUROPEAN PATENT APPLICATION

(11) **EP 4 703 864 A1**
(43) Date of publication of application: **04.03.2026**
(21) Application number: 25199258.2
(22) Date of filing: 01.09.2025
(51) Int. Cl.: G06F 3/12, G06F 1/3234

(54) **ELECTRIC EQUIPMENT**

(30) Priority: 02.09.2024 JP 2024150876; 09.04.2025 JP 2025064402; 17.06.2025 JP 2025101518
(71) Applicant: Canon Kabushiki Kaisha, Tokyo, 146-8501 (JP)
(72) Inventor: HARADA, Keiji, Tokyo 146-8501 (JP); UEKI, Hideyuki, Tokyo 146-8501 (JP)
(74) Representative: TBK

(57) **Abstract**

An electric equipment (1) includes control means (30), power supply means (23), monitoring means (24), and storing means (28) that stores state information representing a power state of the control means (30). The power supply means (23) and the monitoring means (24) obtain the state information from the storing means (28). In a case where first state information is stored in the storing means (28), the power supply means (23) performs supply of power to the control means (30) and the monitoring means (24) stops monitoring of a monitoring target. In a case where second state information is stored in the storing means (28), the power supply means (23) stops the supply of power to the control means (30) and the monitoring means (24) performs monitoring of the monitoring target.

## Description

### TECHNICAL FIELD

The present disclosure relates to a power saving technique for electric equipment.

### BACKGROUND

To reduce the power consumption of electric equipment, there is known a technique capable of changing the power state of electric equipment between a normal state and a power saving state in which power consumption is lower than that in the normal state. In the power saving state, for example, power is not supplied to at least some parts of electric equipment, thereby reducing power consumption. Japanese Patent Laid-Open No. 2022-10638 discloses the first control unit including a receiving unit that receives the detection result of a sensor configured to detect the state of electric equipment, and discloses a technique of obtaining the detection result from the second control unit when the first control unit is in the power saving state.

When the power state is shifted between the normal state and the power saving state, it is necessary to switch supply and stop of power and switch activation and stop of a configuration that monitors a state in the power saving state. This complicates control.

### SUMMARY

The present disclosure provides a technique of preventing complication of control in shift of the power state.

The present disclosure in an aspect provides an electric equipment as specified in claims 1. Optional features are specified in claim 2 to 13.

Features of the present disclosure will become apparent from the following description of embodiments with reference to the attached drawings. The following description of embodiments are described by way of example.

### BRIEF DESCRIPTION OF THE DRAWINGS

Fig. 1 is a view of the outer appearance of a printing apparatus according to an embodiment;
Fig. 2 is a perspective view illustrating the internal mechanism of the printing apparatus in Fig. 1;
Fig. 3 is a block diagram illustrating the configuration of a control unit;
Fig. 4 is a chart illustrating an operation example of the control unit;
Fig. 5 is a chart illustrating an operation example of the control unit;
Fig. 6 is a flowchart illustrating a processing example of a system control circuit;
Fig. 7 is a block diagram illustrating the configuration of another control unit;
Fig. 8 is a block diagram of the system power supply generation circuit of the control unit in Fig. 7;
Fig. 9 is a table illustrating an example of the relationship between a control voltage, voltages used, and the activation order of corresponding power supply circuits;
Fig. 10 is a timing chart illustrating an example of the activation order and stop order of the power supply circuits;
Fig. 11 is a block diagram of a system power supply generation circuit in another example;
Fig. 12 is a table illustrating an example of the relationship between a control voltage, voltages used, the activation order of corresponding power supply circuits, and delay circuits; and
Fig. 13 is a timing chart illustrating an example of the activation order and stop order of the power supply circuits, and delay times.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

### <Outline of Electric Equipment>

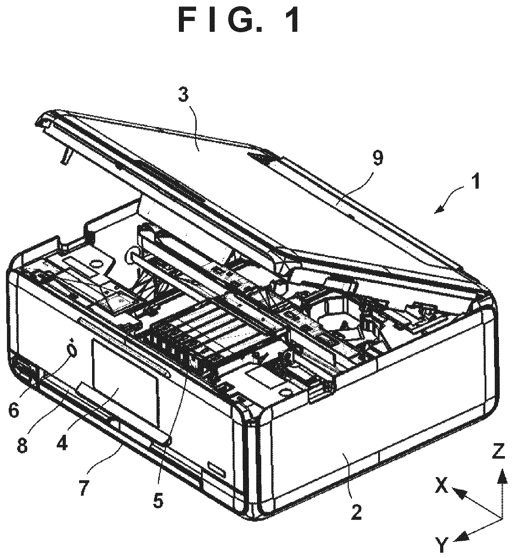

Fig. 1 is a view of the outer appearance of electric equipment 1 according to an embodiment of the present disclosure. The electric equipment 1 according to this embodiment is an inkjet printing apparatus that discharges ink as a liquid, thereby printing on a print medium. However, the present disclosure is also applicable to various kinds of electric equipment other than the inkjet printing apparatus. In Fig. 1, arrows X and Y indicate directions perpendicular to each other, and an arrow Z indicates a top-and-bottom direction (direction of gravity). The X direction is the direction of width (left-and-right direction) of the electric equipment 1. The Y direction is the direction of depth of the electric equipment 1.

Note that "print" includes not only forming significant information such as characters and graphics, but also forming images, figures, patterns, and the like on print media in a broad sense, or processing media, regardless of whether the information is significant or insignificant or whether the information is visualized so that a human can visually perceive it. In addition, although in this embodiment, sheet-like paper is assumed as a "print medium", cloth, a plastic film, and the like may also be used.

The electric equipment 1 has a flat rectangular parallelepiped shape as a whole, and includes an apparatus main body 2, a scanner unit 3, and a stacking unit 7. The scanner unit 3 is provided to cover the upper portion of the apparatus main body 2, and constitutes the top of the electric equipment 1. The scanner unit 3 can read an original and generate the image data. The scanner unit 3 is a movable portion operable by a user, and can be opened and closed. Fig. 1 illustrates the scanner unit 3 in the open state. The scanner unit 3 can be opened to expose outside the internal mechanism of the apparatus main body 2 and perform maintenance and the like.

The stacking unit 7 is a tray on which print media are stacked, is a movable portion operable by the user, and can be pulled out in the Y direction and mounted (pushed inward) with respect to the apparatus main body 2. A foldable tray 9 on which print media are stacked is also provided on the rear side of the apparatus main body 2.

A delivery portion 8 to which a printed print medium is delivered is formed on the front of the electric equipment 1. An operation panel 4 and a power key 6 that accept a user operation are provided on the front of the electric equipment 1. The operation panel 4 is a touch panel, and also serves as a display that displays a setup screen and the like to the user. In the present embodiment, the power key 6 is a push button switch. The user can operate the power key 6 to input a power on instruction and a power off instruction to the electric equipment 1.

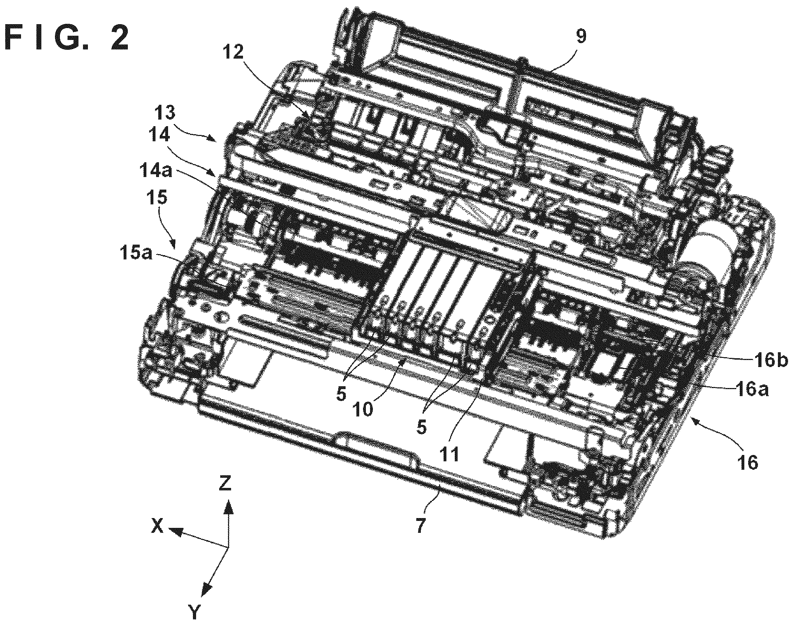

In addition to Fig. 1, Fig. 2 will be referred to. Fig. 2 is an explanatory view illustrating the internal mechanism of the electric equipment 1. The electric equipment 1 includes a discharging head 11. The discharging head 11 is a printhead that discharges ink supplied from a container 5 to a print medium, thereby enabling printing. The discharging head 11 has a discharging surface on which a plurality of nozzles configured to discharge ink are formed. For example, an electrothermal transducer (heater) is provided at each nozzle. The electrothermal transducer heats and bubbles ink upon energization, and discharges the ink by the bubbling energy.

The discharging head 11 is mounted on a carriage 10. The carriage 10 reciprocates in the X direction (main scanning direction) by a driving unit 13. The driving unit 13 includes a driving pulley and a driven pulley that are arranged apart in the X direction, an endless belt wound around these pulleys, and a carriage motor serving as a driving source that rotates the driving pulley. The carriage 10 is coupled to the endless belt, and the endless belt runs to move the carriage 10 in the X direction. During the movement of the carriage 10, ink is discharged from the discharging head 11 to a print medium, thereby printing an image. This operation is sometimes called print scanning.

The container 5 is an ink tank that stores ink. In the present embodiment, a plurality of containers 5 are mounted on the carriage 10. Different types of inks are stored in the respective containers 5. The type of ink is, for example, a specific color of ink.

The electric equipment 1 includes a feed unit 12 and a conveyance unit 14 that convey a print medium. The feed unit 12 includes a feed mechanism that feeds a print medium from the stacking unit 7 or the tray 9. The feed mechanism includes, for example, a feed roller that feeds a print medium, and a feed motor serving as a driving source that rotates the feed roller. The conveyance unit 14 is a mechanism that conveys in the Y direction (sub-scanning direction) a print medium fed from the feed unit 12. The conveyance unit 14 includes a conveyance roller 14a, and a conveyance motor serving as a driving source that rotates the conveyance roller 14a. A pinch roller (not illustrated) contacts the conveyance roller 14a under pressure, and a print medium is clamped at a nip between the pinch roller and the conveyance roller 14a. Rotation of the conveyance roller 14a intermittently conveys the print medium to the discharging head 11. A print operation is performed by alternately repeating the conveyance operation of a print medium by the carriage 10, and print scanning.

In this manner, the electric equipment 1 according to the present embodiment is a serial inkjet printing apparatus in which the discharging head 11 is mounted on the carriage 10 configured to reciprocate. However, the present embodiment is also applicable to another printing apparatus such as an inkjet printing apparatus including a so-called full-line discharging head (printhead) in which a plurality of nozzles configured to discharge a liquid are provided in a region equivalent to the width of a print medium.

A delivery unit 15 is arranged downstream in the conveyance direction of the conveyance unit 14. The delivery unit 15 includes a delivery roller 15a extending in the X direction. The delivery roller 15a rotates by the driving force of a driving source (not illustrated) (for example, the conveyance motor is commonly used), and delivers a print medium conveyed from the conveyance unit 14 to the delivery portion 8.

A maintenance unit 16 is a mechanism that maintains and recovers the ink discharging performance of the discharging head 11. The maintenance unit 16 is arranged at one end of the apparatus main body 2 in the X direction. Movement of the carriage 10 moves the discharging head 11 to the maintenance unit 16 to maintain and recover the discharging performance of the discharging head 11. The maintenance unit 16 includes a cap 16a and a wiper 16b. In the present embodiment, preliminary discharging, suction, or wiping is possible for maintenance and recovery of the ink discharging performance of the discharging head 11. In the present embodiment, preliminary discharging is an operation of discharging ink from the discharging head 11 to the cap 16a. Suction is an operation of sucking the inside of the cap 16a by a pump(not illustrated) in a state in which the discharging head 11 is capped with the cap 16a. A thickened substance near the nozzle can be sucked and removed. Wiping is an operation of wiping the ink discharging surface of the discharging head 11 by the wiper 16b. The discharging head 11 can be cleaned via the suction or wiping operations as part of recovering the discharging performance.

### <Control Unit>

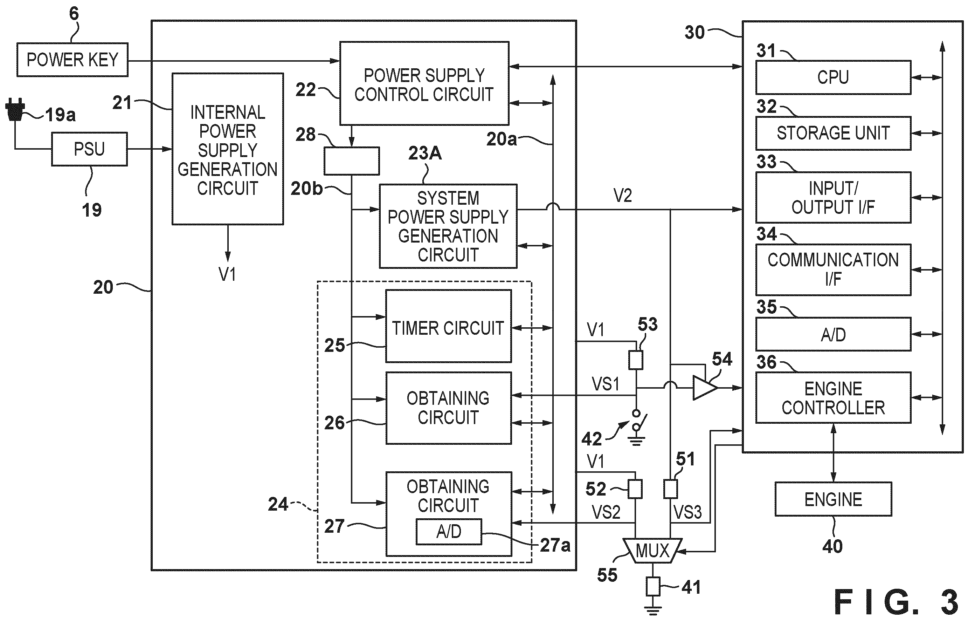

Fig. 3 is a block diagram of the control unit of the electric equipment 1. The control unit is an electric circuit that controls the electric equipment 1. The control unit includes a system power supply circuit 20 and a system control circuit 30. The system power supply circuit 20 is an IC that controls the power supply of the electric equipment 1. The system control circuit 30 is an IC that controls the overall electric equipment 1. The system control circuit 30 controls various operations such as a print operation using the discharging head 11, and a read operation using the scanner unit 3. The system control circuit 30 is, for example, an ASIC.

The system control circuit 30 includes a CPU 31, a storage unit 32, an input/output interface (I/F) 33, a communication interface (I/F) 34, an A/D converter 35, and an engine controller 36, which are connected via a bus. The CPU 31 is a processor that controls each operation of the electric equipment 1 and controls data processing and the like. The CPU 31 controls the overall electric equipment 1 by executing a program stored in the storage unit 32. The storage unit 32 is constituted by, for example, a semiconductor memory (for example, ROM or RAM). In the storage unit 32, various data necessary for processing such as data received from a host computer are stored in addition to programs to be executed by the CPU 31. The engine controller 36 includes a driver that controls an engine 40, and the like. The engine 40 includes a configuration regarding the print operation (the discharging head 11, the feed unit 12, the driving unit 13, the conveyance unit 14, the delivery unit 15, the maintenance unit 16, various sensors, the scanner unit 3, and the like).

The input/output I/F 33 includes an input port and an output port for performing communication with a power supply control circuit 22 of the system power supply circuit 20, and an input port for inputting respective signals from sensors 41 and 42. The communication I/F 34 communicates with a host computer (not illustrated). The host computer is, for example, a personal computer or mobile terminal (for example, a smartphone or a tablet terminal) used by the user.

The sensor 41 is a temperature sensor that detects the temperature of the discharging head 11. The sensor 41 is, for example, an NTC thermistor. The sensor 41 is provided on, for example, the carriage 10. The A/D converter 35 converts an analog signal VS3 serving as the detection result of the sensor 41 into a digital signal.

The sensor 42 is a tray sensor that detects the position (pullout or mounting) of the stacking unit 7. The sensor 42 according to the present embodiment is, for example, a leaf switch. The sensor 42 is attached so that the opening/closing state of the switch changes based on the attachment/detachment state of the stacking unit 7. Power is supplied from a voltage V1 to the sensor 42 via a resistor 53. When the switch is open, a voltage VS1 equal to the voltage V1 is input to an obtaining circuit 26 of the system power supply circuit 20 and a buffer 54. When the switch is closed, 0 V is input to the obtaining circuit 26 and the buffer 54.

When a plug 19a is inserted into an electric outlet, a power supply unit (PSU) 19 converts a commercial AC voltage into a DC voltage used in the electric equipment 1, and outputs the DC voltage to an internal power supply generation circuit 21 of the system power supply circuit 20.

The system power supply circuit 20 includes the internal power supply generation circuit 21, the power supply control circuit 22, a system power supply generation circuit 23, and a monitoring circuit 24. The internal power supply generation circuit 21 receives a voltage from the power supply unit (PSU) 19 to generate the internal power supply voltage V1. The voltage V1 is supplied to the respective parts of the system power supply circuit 20 such as the power supply control circuit 22, the system power supply generation circuit 23, and the monitoring circuit 24. The voltage V1 is supplied to the sensor 41 via a resistor 52 and a multiplexer 55. Similarly, the voltage V1 is supplied to the sensor 42 via the resistor 53.

The power supply control circuit 22 is a circuit that controls the overall system power supply circuit 20, and is, for example, a logic circuit. The power supply control circuit 22 communicates with the system control circuit 30 and operates based on a command from the system control circuit 30. The power supply control circuit 22 can input/output data from/to the system power supply generation circuit 23 and the monitoring circuit 24 via a bus 20a. The power supply control circuit 22 is also connected to the power key 6, and can detect a user operation to the power key 6.

The system power supply generation circuit 23 generates a voltage V2 serving as the power supply voltage of the system control circuit 30 based on a setting from the power supply control circuit 22. In the present embodiment, the voltages V1 and V2 equal each other. The voltage V2 is supplied to the sensor 41 via a resistor 51 and the multiplexer 55. The voltage V2 is also supplied to the buffer 54.

In the present embodiment, the ON state and the OFF state are selectable as the power state of the system control circuit 30. The ON state is a normal power state in which the voltage V2 is generated by the system power supply generation circuit 23 and supplied to the system control circuit 30. The OFF state is a power saving state in which the system power supply generation circuit 23 stops generation of the voltage V2 and no power supply voltage is supplied to the system control circuit 30. Note that even in the OFF state, the internal power supply generation circuit 21 keeps generating the voltage V1, and the system power supply circuit 20 operates as long as the plug 19a is inserted in an electric outlet.

The monitoring circuit 24 is a circuit that monitors a monitoring target. In the present embodiment, the monitoring circuit 24 includes a timer circuit 25, the obtaining circuit 26, and an obtaining circuit 27. The timer circuit 25 monitors the elapsed time of the OFF state. The timer circuit 25 generates a short-period clock signal of a specific period (for example, 50 ms) from a clock signal (not illustrated). The timer circuit 25 measures the elapsed time by counting short-period clocks. To count short-period clocks, the timer circuit 25 includes, for example, a 28-bit counter. In this case, an elapsed time of up to about 155 days can be recorded. When the count of the counter reaches a maximum value, the maximum value is stored as the count value. The power supply control circuit 22 can obtain the count value of the timer circuit 25 via the bus 20a, and instruct the timer circuit 25 to clear the count value to 0.

The obtaining circuit 26 monitors the state of the sensor 42 in the OFF state, and obtains the detection result. That is, the obtaining circuit 26 monitors the position of the stacking unit 7. The obtaining circuit 26 is, for example, a latch circuit, and includes a memory that stores the presence/absence of a change of the voltage level of the voltage VS1 in the OFF state. The initial value of information stored in the memory is 0. When the voltage level of the voltage VS1 changes, "1" is stored as information in the memory. "1" represents that the pullout operation of the stacking unit 7 has been performed. The power supply control circuit 22 can obtain the information stored in the memory of the obtaining circuit 26 via the bus 20a, and reset the information stored in the memory to 0.

In the ON state, the system control circuit 30 obtains the detection result of the sensor 42 via the buffer 54. The buffer 54 is a tristate buffer, and outputs three types of states to the system control circuit 30 based on the voltage VS1 and the state of a voltage generated by the system power supply generation circuit 23. First, when a voltage generated by the system power supply generation circuit 23 is 0 V, the output of the buffer 54 is high impedance. When a voltage generated by the system power supply generation circuit 23 is V2, an output voltage VS2 of the buffer 54 has the same logic as that of the voltage VS1. The buffer 54 is provided to electrically separate sensor circuits, such as the sensor 42 that operates at the voltage V1 and the system control circuit 30 that operates at the voltage V2.

The obtaining circuit 27 monitors the state of the sensor 41 in the OFF state and obtains the detection result. That is, the obtaining circuit 27 monitors the temperature of the discharging head 11. The obtaining circuit 27 includes an A/D converter 27a, and converts an analog signal VS2 serving as the detection result of the sensor 41 into a digital signal. The obtaining circuit 27 also includes a memory that stores the conversion result of the A/D converter 27a, and a timer that measures the update cycle of the detection result. The obtaining circuit 27 cyclically obtains the detection result of the sensor 41 by the timer, and stores an A/D-converted value in the memory.

An example of the operation of the obtaining circuit 27 will be described. First, the obtaining circuit 27 waits for the lapse of a predetermined time (for example, 1 min) based on the timer. Then, the A/D converter 27a converts the voltage VS2 into a digital value. The obtaining circuit 27 performs a predetermined calculation, and stores digital information of a resultantly obtained temperature. Then, the obtaining circuit 27 resets the timer to 0, and starts measuring the time. The obtaining circuit 27 repeats this processing. The power supply control circuit 22 can obtain temperature information stored in the memory of the obtaining circuit 27 via the bus 20a, and clear the temperature information stored in the memory.

In the ON state, the system control circuit 30 performs A/D conversion on the detection result of the sensor 41 by the A/D converter 35, and monitors the temperature of the discharging head 11. In the OFF state, the multiplexer 55 is used in the present embodiment to avoid application of the voltage of the sensor 41 to the A/D converter 35 of the system control circuit 30.

The multiplexer 55 is a switch that switches a current supplied to the sensor 41 based on the command signal of the system control circuit 30. In the ON state, the multiplexer 55 applies to the sensor 41 the voltage V2 supplied from the system power supply generation circuit 23, and supplies to the sensor 41 a current supplied via the resistor 51. The voltage VS3 generated in the sensor 41 in this case is input to the A/D converter 35 of the system control circuit 30.

In the OFF state, no voltage is supplied from the system power supply generation circuit 23, and an instruction signal to the multiplexer 55 is 0 V. The multiplexer 55 applies to the sensor 41 the voltage V1 supplied from the internal power supply generation circuit 21, and supplies to the sensor 41 a current supplied via the resistor 52. The voltage VS2 generated in the sensor 41 in this case is input to the A/D converter 27a of the obtaining circuit 27.

In this manner, the multiplexer 55 is used to electrically separate the obtaining circuit 27 operating at the voltage V1, and the system control circuit 30 operating at the voltage V2.

A storing circuit 28 is a circuit that stores state information representing the power state of the system control circuit 30, and outputs the stored state information to a bus 20b. The storing circuit 28 is, for example, a latch circuit including a 1-bit memory, and holds 0 or 1 as state information. "0" is ON information representing the ON state, and "1" is OFF information representing the OFF state. The state information can be set (written) by the power supply control circuit 22. The system power supply generation circuit 23 and the monitoring circuit 24 can obtain the state information via the bus 20b.

When the state information is 1, the system power supply generation circuit 23 stops generation of the voltage V2. Each unit of the monitoring circuit 24 starts monitoring. More specifically, the timer circuit 25 starts measurement of an elapsed time. The obtaining circuit 26 starts monitoring of the detection result of the sensor 42. The obtaining circuit 27 starts monitoring of the detection result of the sensor 41.

When the state information is 0, the system power supply generation circuit 23 starts generation of the voltage V2. Each unit of the monitoring circuit 24 stops monitoring. More specifically, the timer circuit 25 stops measurement of an elapsed time. The obtaining circuit 26 stops monitoring of the detection result of the sensor 42. The obtaining circuit 27 stops monitoring of the detection result of the sensor 41.

In the present embodiment, the operations of the system power supply generation circuit 23 and monitoring circuit 24 can be substantially simultaneously and exclusively controlled by updating the state information of the storing circuit 28, with respect to the start of the operation and the stop of the operation. This can prevent complication of control in shift of the power state, compared to a method of individually outputting operation instructions by a microcomputer or the like to the system power supply generation circuit 23 and the monitoring circuit 24.

### <Operation Example>

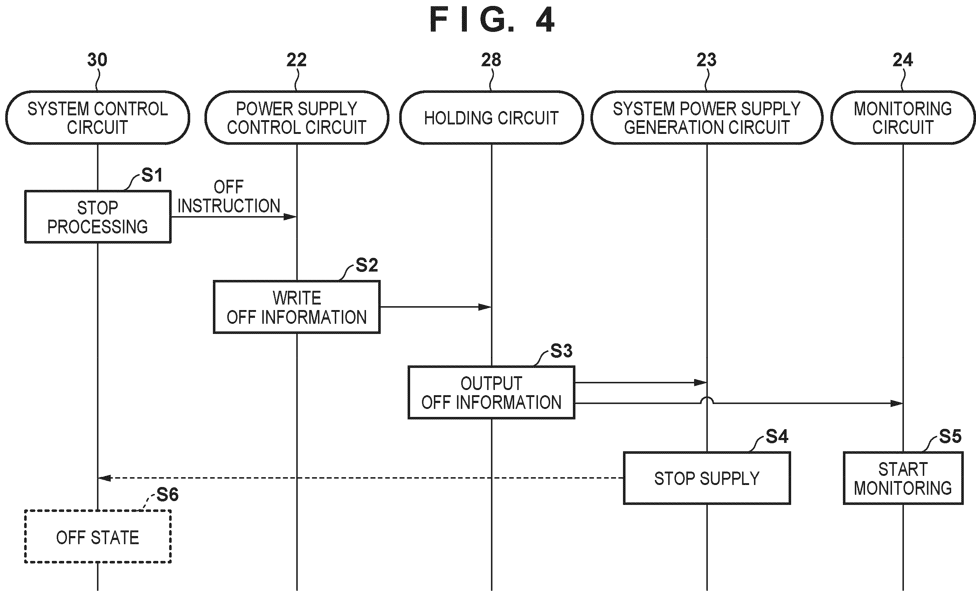

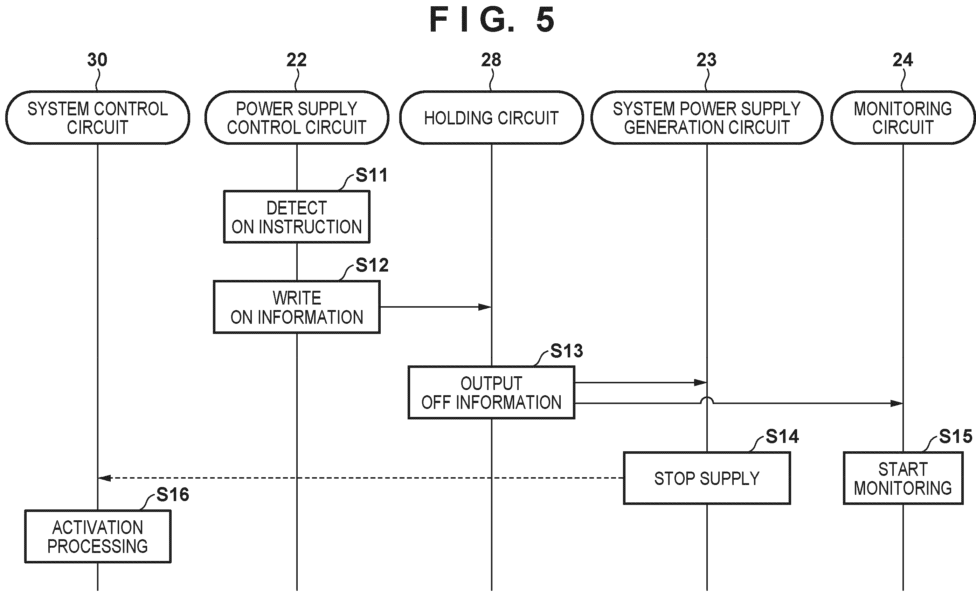

The operations of the system power supply circuit 20 and system control circuit 30 will be explained with reference to Figs. 4 and 5. Fig. 4 illustrates an operation example when the power state of the system control circuit 30 shifts from the ON state to the OFF state.

When shifting from the ON state to the OFF state, the system control circuit 30 executes stop processing (step S1). A shift condition from the ON state to the OFF state is, for example, a notification from the power supply control circuit 22 representing that a power off operation by the user to the power key 6 has been detected. The shift condition can also be, for example, a case where the standby time has reached a predetermined time without a print instruction from the host computer. In stop processing (step S1), the system control circuit 30 executes processing regarding power disconnection, and outputs an OFF instruction to the power supply control circuit 22.

Upon receiving the OFF instruction, the power supply control circuit 22 writes OFF information (1) in the storing circuit 28 (step S2). The storing circuit 28 outputs "1" as OFF information to the bus 20b (step S3). The output OFF information is input to the system power supply generation circuit 23 and the respective circuits 25 to 27 of the monitoring circuit 24.

Upon receiving the OFF instruction, the system power supply generation circuit 23 stops generation of the voltage V2, thereby stopping supply of the voltage V2 to the system control circuit 30 (step S4). The system control circuit 30 shifts to the OFF state (step S6). The respective circuits 25 to 27 of the monitoring circuit 24 start monitoring of the corresponding monitoring targets (step S5).

Fig. 5 illustrates an operation example when the power state of the system control circuit 30 shifts from the OFF state to the ON state. The power supply control circuit 22 detects an ON instruction (press of the key) by the user to the power key 6 (step S11). The power supply control circuit 22 writes ON information (0) in the storing circuit 28 (step S12). The storing circuit 28 outputs "0" as ON information to the bus 20b (step S13). The output ON information is input to the system power supply generation circuit 23 and the respective circuits 25 to 27 of the monitoring circuit 24.

Upon obtaining the ON instruction, the system power supply generation circuit 23 starts generation of the voltage V2, thereby starting supply of the voltage V2 to the system control circuit 30 (step S14). The system control circuit 30 shifts to the ON state to execute activation processing (step S16). The respective circuits 25 to 27 of the monitoring circuit 24 stop monitoring of the corresponding monitoring targets (step S15).

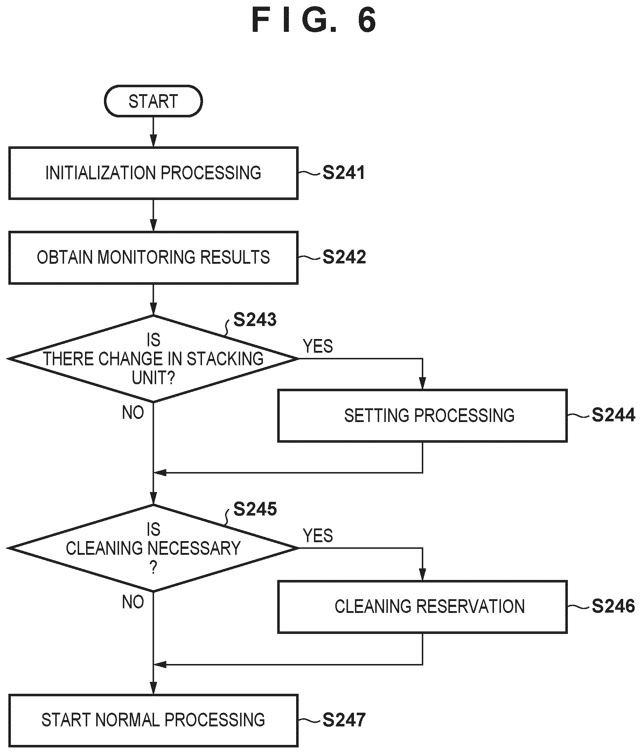

Fig. 6 is a flowchart illustrating an example of the activation processing in step S16 of Fig. 5 as an example of processing executed by the CPU 31 of the system control circuit 30. In step S241, predetermined initialization processing is performed. In step S242, the monitoring results of the monitoring circuit 24 in the OFF state are obtained.

More specifically, the system control circuit 30 outputs a monitoring result obtaining request to the power supply control circuit 22. The power supply control circuit 22 obtains monitoring results stored in the timer circuit 25 and the obtaining circuits 26 and 27 from these circuits via the bus 20a, and transmits the obtained monitoring results to the system control circuit 30. The power supply control circuit 22 resets or clears the monitoring results stored in the timer circuit 25 and the obtaining circuits 26 and 27. By this procedure, the system control circuit 30 can obtain the monitoring results of the monitoring circuit 24 in the OFF state.

In step S243, it is determined, based on the monitoring result of the obtaining circuit 26 obtained in step S242, whether a change of the position of the stacking unit 7 has been detected in the OFF state. If a change of the position has been detected, the size or type of print medium may have been changed at a high possibility, so setting processing in step S244 is executed. In the setting processing, for example, a print medium setup screen is displayed on the operation panel 4 to request the user to input the size or type of print medium set in the stacking unit 7. The input information is stored in the storage unit 32, and the stored information is used to control a print operation. If a change of the position of the stacking unit 7 has not been detected in the OFF state, the process advances to step S245.

In step S245, whether cleaning of the discharging head 11 is necessary is determined based on the monitoring results of the timer circuit 25 and obtaining circuit 27 obtained in step S242. In this determination, when the duration time of the OFF state measured by the timer circuit 25 is longer than or equal to a threshold time, it is determined that cleaning of the discharging head 11 is necessary. A change of the physical properties of ink or the like may have occurred near the nozzle because of long-time leaving, and the print quality may degrade.

Also, when the difference between temperatures of the discharging head 11 at the start and end of the OFF state is longer than or equal to a threshold, it is determined that cleaning of the discharging head 11 is necessary. A change of the physical properties of ink or the like may have occurred near the nozzle owing to an abrupt temperature change, and the print quality may degrade. As for the temperature of the discharging head 11 at the start of the OFF state, temperature information stored in the storage unit 32 is used. As for the temperature information, the detection result of the sensor 41 is converted into a digital value by the A/D converter 35 and stored in the storage unit 32 when the system control circuit 30 executes stop processing in step S1 of Fig. 4. As for the temperature of the discharging head 11 at the start of the OFF state, a detection result obtained from the obtaining circuit 27 in step S242 is used.

If it is determined in step S245 that cleaning of the discharging head 11 is necessary, cleaning reservation setting is performed in step S246. The reservation setting is managed using, for example, a predetermined storage area of the storage unit 32. If there is the reservation setting, the performance recovery operation of the discharging head 11 by the maintenance unit 16 is performed immediately before the next print operation. After necessary reservation setting, or if it is determined in step S245 that cleaning of the discharging head 11 is unnecessary, the process advances to step S247. In step S247, the activation processing is completed, normal processing starts, and the print operation becomes possible.

### <Second Embodiment>

Depending on the configuration of electric equipment 1, a plurality of types of voltages may be necessary in a system control circuit 30. Thus, a system power supply generation circuit 23 may be configured to supply a plurality of types of voltages as a voltage V2 serving as the power supply voltage of the system control circuit 30. In this case, the type of necessary voltage may change depending on the system control circuit 30, so the voltage is advantageously selectable. It may be required that the supply order of voltages at the time of activation or the supply stop order at the time of stop is a predetermined order. In the present embodiment, a configuration example capable of coping with such a request will be explained.

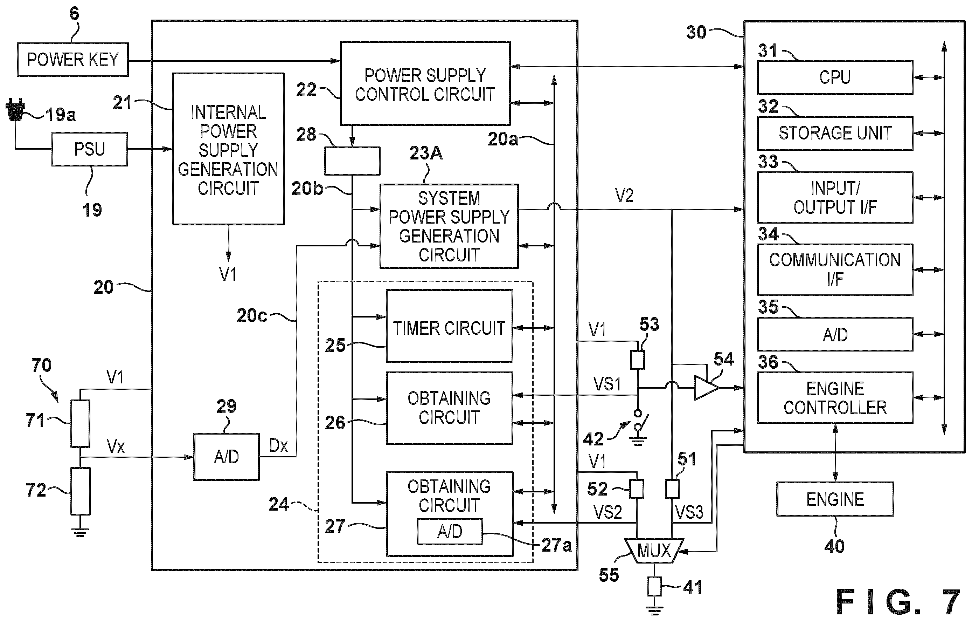

Fig. 7 is a block diagram of a control unit according to the second embodiment. A configuration different from that of the control unit according to the first embodiment illustrated in Fig. 3 will be explained.

A voltage divider circuit 70 includes series-connected resistors 71 and 72, and divides a voltage V1 to generate a control voltage Vx. The control voltage Vx serving as an analog voltage is converted by an A/D converter 29 into a control signal Dx serving as, for example, 5-bit digital information. The control signal Dx is input via a signal line 20c to a system power supply generation circuit 23A in place of the system power supply generation circuit 23.

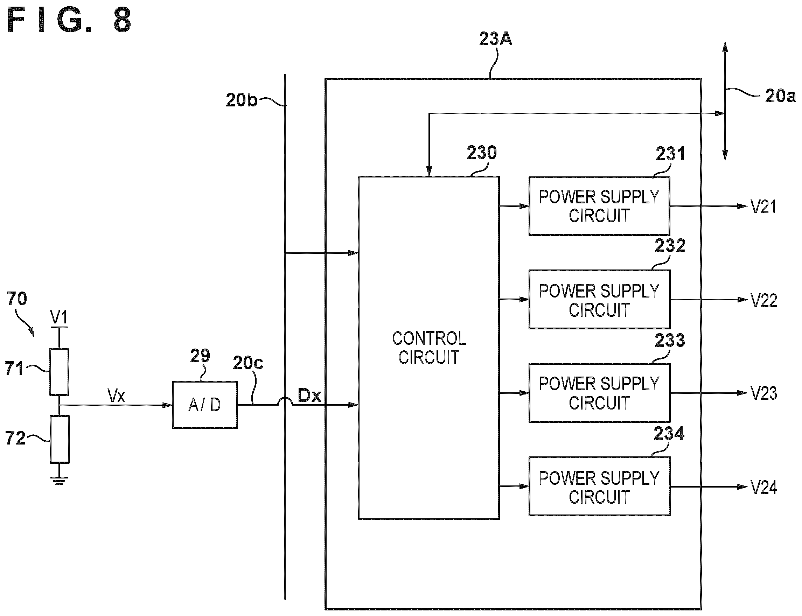

Fig. 8 is a block diagram of the system power supply generation circuit 23A. The system power supply generation circuit 23A includes a control circuit 230, and a plurality of power supply circuits 231 to 234. The power supply circuits 231 to 234 generate voltages V21 to V24 different from each other. The control circuit 230 controls the activation and stop of the power supply circuits 231 to 234. When state information on a bus 20b is 0, the control circuit 230 generates a corresponding voltage from a power supply circuit used among the power supply circuits 231 to 234, and when the state information is 1, stops the power supply circuits 231 to 234. Based on the input control signal Dx (that is, the control voltage Vx), the control circuit 230 controls a power supply circuit used among the power supply circuits 231 to 234, and its activation and stop.

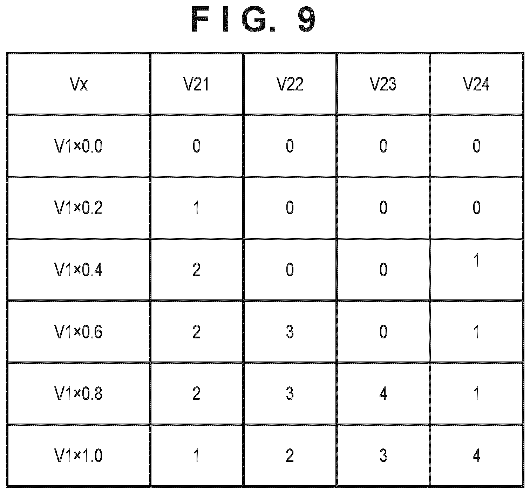

Fig. 9 is a table illustrating an example of the relationship between the control voltage Vx, the voltages V21 to V24 used, and the activation order of the corresponding power supply circuits 231 to 234. In this example, six types of control voltages Vx from 0 to V1 can be selected by recombination of the resistors 71 and 72. Numerals in Fig. 9 represent the sequence numbers of the activation order and stop order. The activation is performed in an order from a power supply circuit of a small sequence number to a power supply circuit of a large sequence number. The stop is performed in an order from a power supply circuit of a large sequence number to a power supply circuit of a small sequence number. "0" represents that a power supply circuit is not used (not activated).

For example, when the control voltage Vx is V1, all the power supply circuits 231 to 234 are used. At the time of activation, the respective power supply circuits are activated in the order from the power supply circuit 231 that outputs the voltage V21 → the power supply circuit 232 that outputs the voltage V22 → the power supply circuit 233 that outputs the voltage V23 → the power supply circuit 234 that outputs the voltage V24. At the time of stop, the respective power supply circuits are stopped in the order from the power supply circuit 234 that outputs the voltage V24 → the power supply circuit 233 that outputs the voltage V23 → the power supply circuit 232 that outputs the voltage V22 → the power supply circuit 231 that outputs the voltage V21.

For example, when the control voltage Vx is V1 × 0.4, the two power supply circuits 231 and 234 are used. At the time of activation, the respective power supply circuits are activated in the order from the power supply circuit 234 that outputs the voltage V24 → the power supply circuit 231 that outputs the voltage V21. Neither the power supply circuit 232 nor the power supply circuit 233 is activated. At the time of stop, the respective power supply circuits are stopped in the order from the power supply circuit 231 that outputs the voltage V21 → the power supply circuit 234 that outputs the voltage V24.

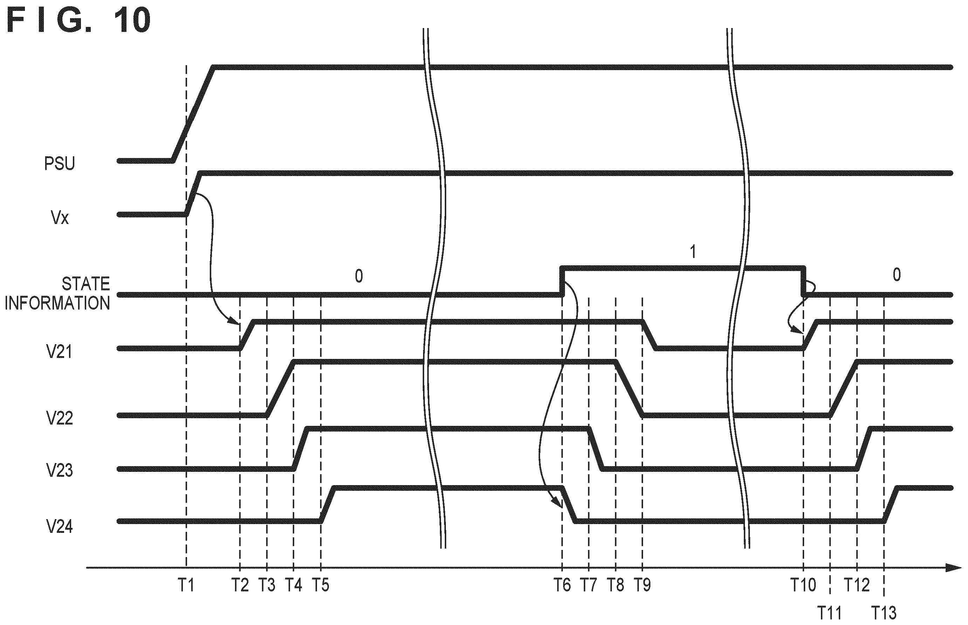

Fig. 10 is a timing chart illustrating an example of the order to activate or stop the power supply circuits 231 to 234 based on a change of state information when the control voltage Vx is V1. In this example, when a plug 19a is inserted into an electric outlet, a power supply unit 19 is activated to change state information to the ON state (state information = 0), then to OFF state (state information = 1), and further to the ON state (state information = 0).

First, when the plug 19a is inserted into an electric outlet, an internal power supply generation circuit 21 generates the internal power supply voltage V1. The voltage V1 is supplied to the voltage divider circuit 70 to generate the control voltage Vx (time T1). Note that, for example, when the resistor 71 of the voltage divider circuit 70 is 0 Ω and the resistor 72 is open, the control voltage Vx = V1. The control voltage Vx is converted into the control signal Dx, and the control signal Dx is input to the system power supply generation circuit 23.

Since the state information is 0, the power supply circuit 231 that generates the voltage V21 is first activated in accordance with the sequence exemplified in Fig. 9 to supply the voltage V21 to the system control circuit 30 (time T2). Then, the power supply circuit 232 that generates the voltage V22 is activated to supply the voltage V22 to the system control circuit 30 (time T3). Subsequently, the power supply circuit 233 that generates the voltage V23 is activated to supply the voltage V23 to the system control circuit 30 (time T4). Finally, the power supply circuit 234 that generates the voltage V24 is activated to supply the voltage V24 to the system control circuit 30 (time T5).

When the state information changes to 1, the power supply circuit 234 that generates the voltage V24 is first stopped in accordance with the sequence exemplified in Fig. 9 to stop the supply of the voltage V24 to the system control circuit 30 (time T6). Then, the power supply circuit 233 that generates the voltage V23 is stopped to stop the supply of the voltage V23 to the system control circuit 30 (time T7). Subsequently, the power supply circuit 232 that generates the voltage V22 is stopped to stop the supply of the voltage V22 to the system control circuit 30 (time T8). Finally, the power supply circuit 231 that generates the voltage V21 is stopped to stop the supply of the voltage V21 to the system control circuit 30 (time T9).

When the state information changes again to 0, the power supply circuit 231 that generates the voltage V21 is first activated in accordance with the sequence exemplified in Fig. 9 to supply the voltage V21 to the system control circuit 30 (time T10). Then, the power supply circuit 232 that generates the voltage V22 is activated to supply the voltage V22 to the system control circuit 30 (time T11). Subsequently, the power supply circuit 233 that generates the voltage V23 is activated to supply the voltage V23 to the system control circuit 30 (time T12). Finally, the power supply circuit 234 that generates the voltage V24 is activated to supply the voltage V24 to the system control circuit 30 (time T13).

After that, the activation and stop of the power supply circuits 231 to 234 are performed based on a change of the state information and the sequence exemplified in Fig. 9. By changing the configuration of the voltage divider circuit 70, power supply circuits used among the power supply circuits 231 to 234, and the orders of activation and stop are changed in accordance with the sequence of Fig. 9. By individually preparing the voltage divider circuit 70, the control unit can be shared between a plurality of types of devices.

### <Third Embodiment>

Depending on the configuration of electric equipment 1, the total time taken to stop all power supplies may be determined in a system control circuit 30. A voltage value may be determined in addition to the stop order of respective power supplies. That is, the voltage value of a power supply to be stopped next may need to be maintained at a predetermined value or more until the voltage of a power supply to be stopped early in the stop process decreases to a predetermined value or less.

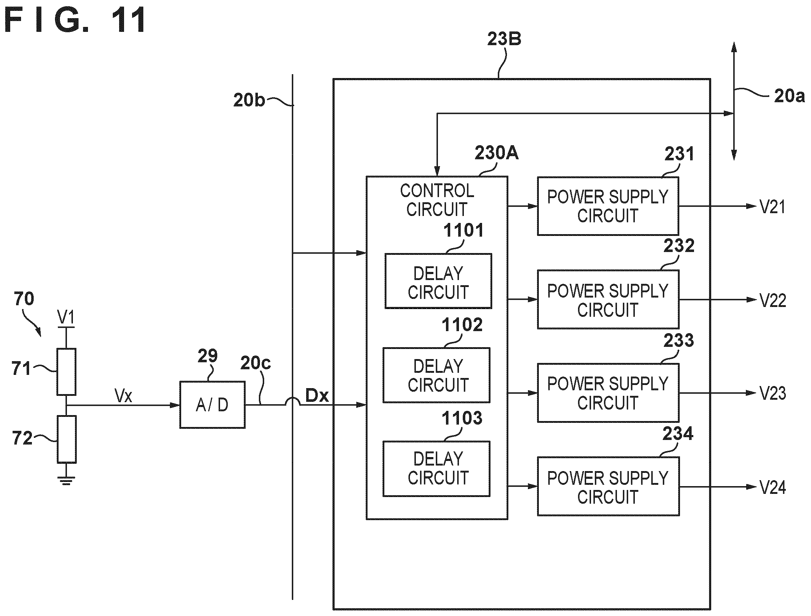

A third embodiment implements a highly flexible power supply stop sequence capable of such adjustment. Fig. 11 is a block diagram of a system power supply generation circuit 23B according to the third embodiment, which is in place of the system power supply generation circuit 23A according to the second embodiment shown in Fig. 8. A configuration of the system power supply generation circuit 23B different from that of the system power supply generation circuit 23A will be explained.

A control circuit 230A includes delay circuits 1101 to 1103. The delay circuit 1101 controls a delay time from the start of stop of a power supply circuit that stops first, to the start of stop of a power supply circuit that stops second in the stop sequence of power supply circuits 231 to 234. Similarly, the delay circuit 1102 controls a delay time from the start of stop of the second power supply circuit to the start of stop of the third power supply circuit. Similarly, the delay circuit 1103 controls a delay time from the start of stop of the third power supply circuit to the start of stop of the fourth power supply circuit.

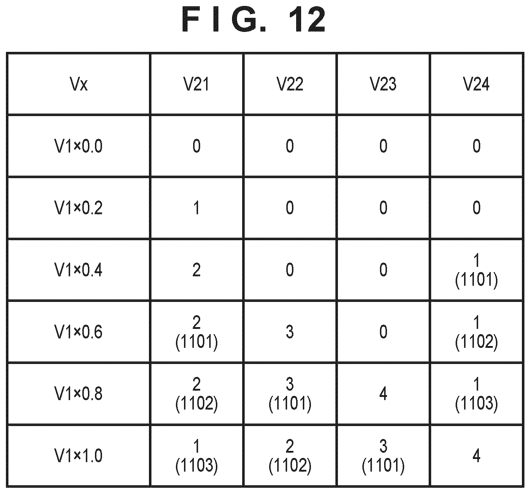

Fig. 12 is a table illustrating an example of the relationship between a control voltage Vx, voltages V21 to V24 used, the activation order of the corresponding power supply circuits 231 to 234, and the delay circuits 1101 to 1103. A case where a delay circuit used is the delay circuit 1101 is represented as (1101). The stop order is similar to the example of Fig. 9.

For example, when the control voltage Vx is V1*1.0, the stop order is the power supply circuit 234 that outputs the voltage V24 → the power supply circuit 233 that outputs the voltage V23 → the power supply circuit 232 that outputs the voltage V22 → the power supply circuit 231 that outputs the voltage V21. As for the stop intervals of the power supply circuits 231 to 234, a delay time determined by the delay circuit 1101 is applied to a stop interval from the power supply circuit 234 (voltage V24) to the power supply circuit 233 (voltage V23). A delay time determined by the delay circuit 1102 is applied to a stop interval from the power supply circuit 233 (voltage V23) to the power supply circuit 232 (voltage V22). A delay time determined by the delay circuit 1103 is applied to a stop interval from the power supply circuit 232 (voltage V22) to the power supply circuit 231 (voltage V21).

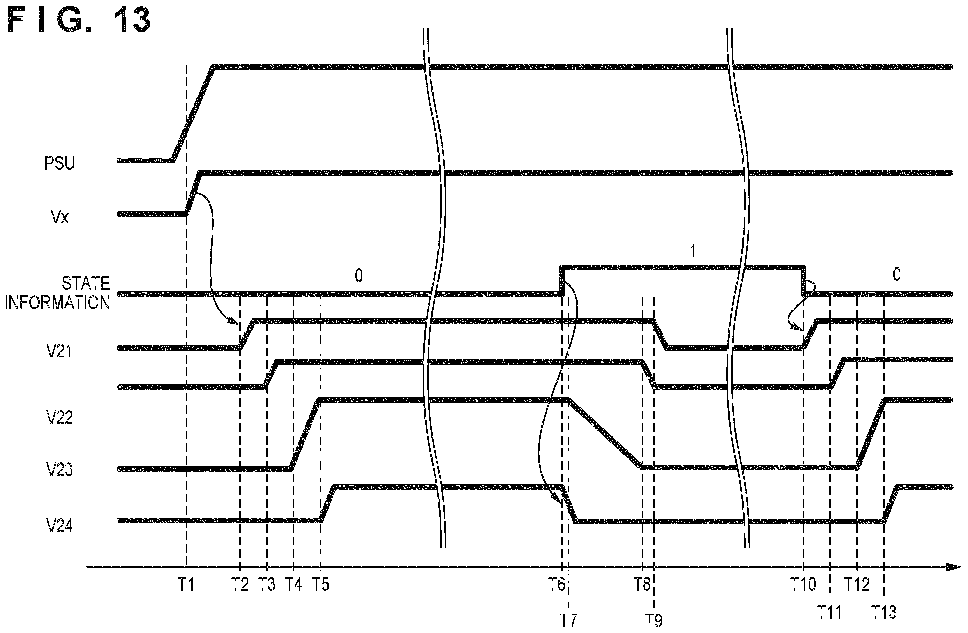

Fig. 13 is a timing chart illustrating an example of the order to activate or stop the power supply circuits 231 to 234 based on a change of state information when the control voltage Vx is V1. The order from time T1 to time T6 is the same as the example of Fig. 10.

At time T6, the state information changes from 0 to 1, so the system power supply generation circuit 23B executes a power supply stop sequence. First, the output of the power supply circuit 234 (voltage V24) is stopped at time T6. Then, the output of the power supply circuit 233 (voltage V23) is stopped after the lapse of a delay time determined by the delay circuit 1101. Subsequently, the output of the power supply circuit 232 (voltage V22) is stopped after the lapse of a delay time determined by the delay circuit 1102. Finally, the output of the power supply circuit 231 (voltage V21) is stopped after the lapse of a delay time determined by the delay circuit 1103.

By this control, a stop sequence suited to the request of the system control circuit 30 can be implemented. For example, the stop sequence can cope with a case (to be referred to as a time condition hereinafter) where the time (to be referred to as a power supply stop sequence time hereinafter) until the voltage of the power supply circuit 231 (voltage V21) becomes sufficiently low after the output of the voltage V24 is stopped (time T6) needs to fall within a predetermined time, for example, 100 ms. Also, the stop sequence can cope with a case (to be referred to as a voltage condition hereinafter) where the output of the power supply circuit 232 (voltage V22) needs to be stopped after the voltage of the power supply circuit 233 (voltage V23) decreases to a predetermined value or less. In addition, the stop sequence can cope with a case (voltage condition) where the output of the power supply circuit 232 (voltage V22) needs to be stopped when the time taken for the voltage of the power supply circuit 233 (voltage V23) to decrease to the predetermined value or less exceeds a predetermined ratio to the power supply stop sequence, for example, the time is 80 ms. When there is no other time restriction, a stop sequence satisfying the time and voltage conditions can be implemented by setting an interval from T7 to T8 to be 80 ms, and an interval from T6 to T7 and an interval from T8 to T9 to be 100 µs.

### <Other Embodiments>

In the above embodiments, the elapsed time, a change of the position of the stacking unit 7, and the temperature of the discharging head 11 have been described as examples of monitoring targets in the OFF state, but the monitoring target is not limited to these items. For example, opening/closing of the scanner unit 3 may be a monitoring target. When the scanner unit 3 is opened and closed, the container 5 may be replaced. Further, the number of types of monitoring targets may not be limited to three, and may be one or four or more.

While the above embodiments have described an inkjet printing apparatus as an example of the electric equipment, any other type of electric equipment is applicable. For example, when the embodiments are applied to an air purifier, a sensor may be provided on a cover for storing a filter, and the detection result of the sensor may be monitored in the OFF state. When it is detected that the cover is opened in the OFF state, the user may be notified in the soft ON state of a message for confirming whether the filter has been replaced.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An electric equipment (1) comprising:
control means (30) configured to control the electric equipment;
power supply means (23) arranged to supply power to the control means;
monitoring means (24) arranged to monitor a monitoring target; and
storing means (28) arranged to store state information representing a power state of the control means,
wherein each of the power supply means (23) and the monitoring means (24) obtains the state information from the storing means (28),
in a case where first state information is stored in the storing means (28), the power supply means (23) performs supply of power to the control means (30), and the monitoring means (24) stops monitoring of the monitoring target, and
in a case where second state information is store in the storing means (28), the power supply means (23) stops the supply of power to the control means (30), and the monitoring means (24) performs monitoring of the monitoring target.

2. The electric equipment according to claim 1, further comprising power supply control means (22) configured to set the state information stored in the storing means (28),
wherein the power supply control means (22) sets the second state information as the state information based on a power off instruction from the control means (30) and sets the first state information as the state information based on a power on instruction from a user.

3. The electric equipment according to claim 1 or 2, wherein when the power supply means (23) starts supply of power, the control means (30) obtains a monitoring result of the monitoring means, and performs processing based on the obtained monitoring result.

4. The electric equipment according to any one of claims 1 to 3, wherein the monitoring means (24) includes a timer (25) arranged to measure an elapsed time as the monitoring target.

5. The electric equipment according to any one of claims 1 to 4, wherein the monitoring means (24) includes obtaining means (26, 27) arranged to obtain a detection result of a sensor (41, 42), as the monitoring target, provided in the electric equipment.

6. The electric equipment according to claim 5, wherein the control means (30) includes first converting means (35) arranged to perform A/D conversion on the detection result of the sensor (41), and
wherein the obtaining means (27) includes second converting means (27a) arranged to perform A/D conversion on the detection result of the sensor (41).

7. The electric equipment according to claim 1, wherein the electric equipment is a printing apparatus including discharging means (11) arranged to perform printing by discharging a liquid to a print medium.

8. The electric equipment according to claim 7, wherein the monitoring means (24) includes obtaining means (27) arranged to obtain a detection result of a temperature sensor (41), as the monitoring target, configured to detect a temperature of the discharging means (11).

9. The electric equipment according to claim 7 or 8, wherein the printing apparatus includes a main body (2) and stacking means (7) arranged to be pulled out from the main body and stack the print medium, and
wherein the monitoring means (24) includes obtaining means arranged to obtain a detection result of a sensor (42), as the monitoring target, configured to detect pullout of the stacking means (7).

10. The electric equipment according to any one of claims 1 to 9, wherein the power supply means (23A) includes a plurality of power supply circuits (231-234) of different supply voltages to the control means, and
wherein when starting supply of power to the control means (30), the power supply means (23A) controls, based on a control signal (Dx) input to the power supply means (23A), power supply circuits (231-234) used from among the plurality of power supply circuits (231-234) and an activation order.

11. The electric equipment according to claim 10, wherein when stopping the supply of power to the control means (30), the power supply means (23A) stops the power supply circuits (231-234) in an order reverse to the activation order.

12. The electric equipment according to claim 10 or 11, further comprising:
a voltage divider circuit (70); and
converting means (29) arranged to perform A/D conversion on a control voltage (Vx) generated by the voltage divider circuit (70) and input the control voltage as the control signal (Dx) to the power supply means (23A).

13. The electric equipment according to claim 11, wherein the power supply means controls a delay time from a start of stop of one power supply circuit to a start of stop of a next power supply circuit.
